# FASCICULE DE BREVET EUROPEEN

(11) **EP 3 995 681 B1**
(45) Date de publication et mention de la délivrance du brevet: **17.07.2024**
(21) Numéro de dépôt: 21206879.5
(22) Date de dépôt: 08.11.2021
(51) Int. Cl.: F02C 7/36, F16H 1/28

(54) **REDUCTEUR MECANIQUE DE TURBOMACHINE D'AERONEF**
MECHANISCHES REDUKTIONSGETRIEBE FÜR TURBOTRIEBWERK EINES LUFTFAHRZEUGS
MECHANICAL GEAR FOR AIRCRAFT TURBINE ENGINE

(30) Priorité: 10.11.2020 FR 2011537
(43) Date de publication de la demande: 11.05.2022
(73) Titulaire: Safran Transmission Systems, 92700 Colombes (FR)
(72) Inventeur: MOULY, Guillaume Pierre, 77550 MOISSY-CRAMAYEL (FR); SIMON, Adrien Louis, 77550 MOISSY-CRAMAYEL (FR); GHRIBI, Dhafer, 77550 MOISSY-CRAMAYEL (FR)
(74) Mandataire: Gevers & Orès

(56) Documents cités:
- EP-A1- 3 726 031
- WO-A1-2010/092263
- FR-A1- 2 928 976
- US-A- 3 307 433

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 008 463, FR-A1-2 928 976, EP-A1-3 726 031, US-A-3,307,433 et FR-A1-3 041 054.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés d'un ou plusieurs étages d'engrènement. Cet engrènement est assuré de différentes façons comme par contact, par friction ou encore par champs magnétique.

Dans la présente demande, on entend par « étage » ou « denture », au moins une série de dents d'engrènement avec au moins une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère en général avec la couronne.

Un réducteur à double étage d'engrènement présente l'avantage d'avoir un rapport de réduction plus important qu'un réducteur à simple étage d'engrènement de même encombrement.

L'invention propose un perfectionnement permettant d'augmenter encore davantage le rapport de réduction d'un réducteur mécanique de turbomachine d'aéronef.

### Résumé de l'invention

L'invention concerne un réducteur mécanique de turbomachine, en particulier d'aéronef, ce réducteur comportant :
- un solaire mobile en rotation autour d'un axe et comportant une denture externe comprenant deux séries de dents adjacentes,
- une couronne fixe qui s'étend autour de l'axe et qui porte une denture interne comportant deux séries de dents, cette couronne fixe étant configurée pour être fixée à un stator de la turbomachine, et
- des satellites qui sont engrenés avec le solaire et la couronne fixe, les satellites étant portés par un porte-stellites mobile en rotation autour de l'axe et chacun des satellites étant à double étage d'engrènement et comportant une première denture externe de diamètre moyen D1 et comportant deux séries de dents adjacentes, et une seconde denture externe de diamètre moyen D2, différent de D1, et comportant deux séries de dents, les deux séries de dents de la première denture de chacun des satellites étant engrenées avec les deux séries de dents de la denture du solaire, caractérisé en ce qu'il comprend en outre :
- une couronne mobile qui s'étend autour de l'axe et qui porte une denture interne à deux séries de dents adjacentes, cette couronne mobile étant indépendante de la couronne fixe et étant configurée pour être fixée à un rotor de la turbomachine, chacun des satellites étant engrenés avec le solaire et les couronnes fixe et mobile,

en ce que toutes les séries de dents sont disposées de manière symétrique par rapport à un plan médian perpendiculaire à l'axe,
et en ce que la couronne mobile comprend deux demi-couronnes fixées entre elles et portant respectivement les deux séries de dents, ces deux séries de dents étant engrenées avec les deux séries de dents de la première denture de chacun des satellites, et la couronne fixe comprenant deux anneaux disposés de chaque côté de la couronne mobile et portant respectivement les deux séries de dents, ces deux séries de dents étant engrenées avec les deux séries de dents de la seconde denture de chacun des satellites.

L'invention propose ainsi un réducteur à double couronne indépendante et ayant des fonctions différentes. L'une des couronnes est fixe et l'autre des couronnes est mobile en rotation. On comprend donc que la couronne de sortie forme une sortie (de couple) du réducteur, l'entrée du réducteur étant formée par le solaire. Le porte-satellites est mobile également en rotation. Il peut être libre en rotation et donc indépendant de tout rotor de la turbomachine. En variante, il pourrait également être relié à un rotor de la turbomachine, différent du rotor relié à la couronne.

L'invention est destinée à un réducteur à double étage d'engrènement comme évoqué dans ce qui précède. Elle est compatible avec des dentures de n'importe quel type (droites, hélicoïdales, chevrons, etc.). L'invention est en outre compatible avec un porte-satellites de type monobloc ou de type cage et porte-cage. Ces différents types de réducteur étant bien connus de l'homme du métier.

Le réducteur selon l'invention peut comprendre une ou plusieurs des caractéristiques suivantes, prises isolément les unes des autres, ou en combinaison les unes avec les autres :
- chacun des satellites est engrené par sa première denture avec la denture du solaire et la denture de la couronne fixe, et par sa seconde denture avec la denture de la couronne mobile ;
- chacun des satellites est engrené par sa première denture avec la denture du solaire et la denture de la couronne mobile, et par sa seconde denture avec la denture de la couronne fixe ;
- le solaire est accouplé à un arbre ou solidaire d'un arbre, les satellites pouvant être disposés autour d'au moins une partie de cet arbre ;
- les dentures des couronnes fixe et mobile ont un même nombre de dents ;
- les dentures des couronnes fixe et mobile ont des nombres de dents différents ;
- toutes les dentures sont choisies parmi des dentures, droites, hélicoïdales ou en chevrons ;
- le diamètre D2 de la seconde denture est inférieur au diamètre D1 de la première denture.

L'invention concerne en outre une turbomachine, en particulier d'aéronef, comportant un réducteur mécanique tel que décrit ci-dessus.

Le réducteur selon l'invention peut comprendre une ou plusieurs des caractéristiques suivantes, prises isolément les unes des autres, ou en combinaison les unes avec les autres :
- la couronne fixe est fixée à au moins un élément de stator ;
- la couronne mobile est fixée à un rotor de soufflante ;
- le porte-satellites est montée libre en rotation ;
- un des anneaux de la couronne fixe est fixé à un élément de stator situé en aval du réducteur, tel qu'un carter de stator et par exemple un carter intermédiaire, et l'autre des anneaux de la couronne fixe est fixé à un élément de stator situé en amont du réducteur, tel qu'un cône d'entrée d'air.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique,
[Fig.3] la figure 3 est une autre vue partielle en coupe axiale d'un réducteur mécanique, et illustre la technique antérieure à la présente invention,
[Fig.4] la figure 4 est une vue schématique en coupe axiale et en perspective d'un réducteur à double étage d'engrènement symétrique, et illustre également la technique antérieure à la présente invention,
[Fig.5] la figure 5 est une autre vue schématique en coupe axiale du réducteur de la figure 4 ;
[Fig.6] la figure 6 est une vue très schématique partielle en coupe axiale d'un réducteur, , qui ne fait pas partie de l'invention ;
[Fig.7] la figure 7 est vue similaire à celle de la figure 6 et illustre un autre réducteur, qui ne fait pas partie de l'invention ;
[Fig.8] la figure 8 est vue similaire à celle de la figure 6 et illustre un autre réducteur, qui ne fait pas partie de l'invention ;
[Fig.9] la figure 9 est vue schématique partielle en coupe axiale d'un réducteur du type de celui de la figure 8, qui ne fait pas partie de l'invention ;
[Fig.10] la figure 10 est vue schématique partielle en coupe axiale d'un réducteur du type de celui de la figure 7, qui ne fait pas partie de l'invention ;
[Fig.11] la figure 11 est vue schématique partielle en coupe axiale d'un réducteur du type de celui de la figure 8, qui ne fait pas partie de l'invention ;
[Fig.12] la figure 12 est vue schématique partielle en coupe axiale d'une turbomachine équipée d'un réducteur, tel que l'un de ceux des figures 6 à 11, qui ne font pas partie de l'invention ;
[Fig.13] la figure 13 est vue similaire à celle de la figure 6 et illustre un mode de réalisation du réducteur selon l'invention ;
[Fig.14] la figure 14 est vue schématique partielle en coupe axiale d'un réducteur selon le mode de réalisation de la figure 13 ; et
[Fig.15] la figure 15 est vue schématique partielle en coupe axiale d'une turbomachine équipée d'un réducteur selon l'invention, tel que celui de la figure 13 ou 14.

### Description détaillée de l'invention

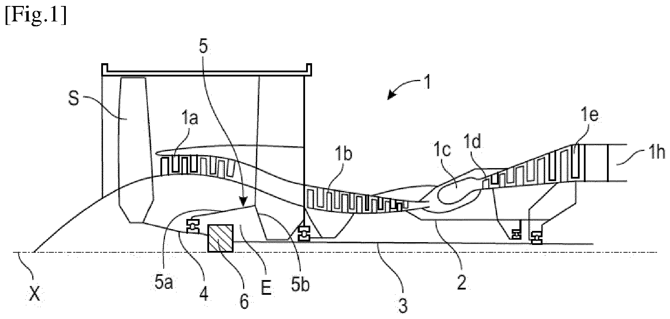

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1 d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

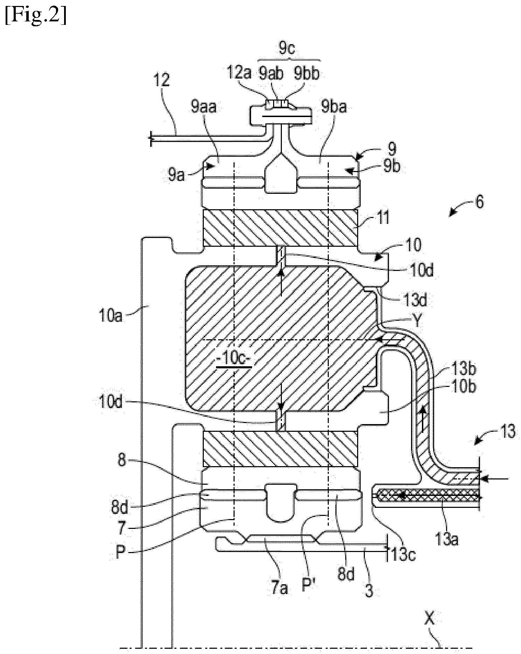

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
▪ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la demi-couronne amont 9a et la demi-bride de fixation 9bb de la demi-couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

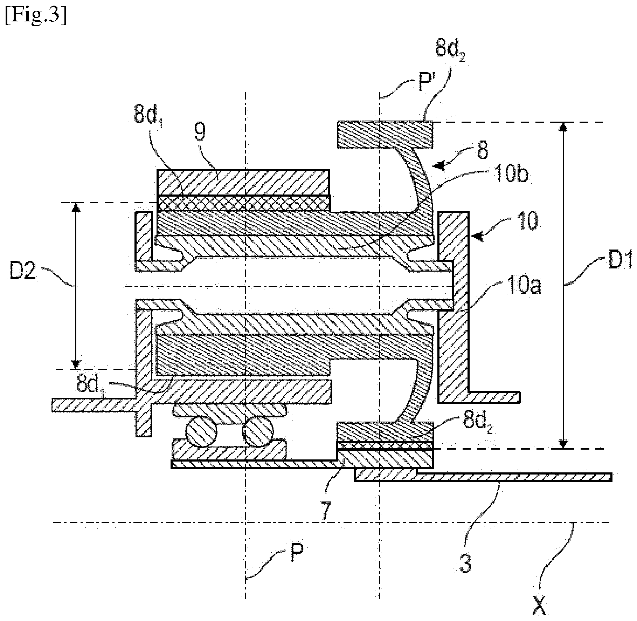

La figure 3 montre un autre exemple d'architecture de réducteur, dit à double étage d'engrènement, dans lequel chaque satellite 8 comprend deux dentures 8d1, 8d2 distinctes configurées pour coopérer respectivement avec la couronne 9 et le solaire 7.

Dans cette figure 3, les éléments déjà décrits dans ce qui précède sont désignés par les mêmes références.

La denture 8d1 d'engrènement avec la couronne 9a un diamètre moyen noté D2 et est situé dans un plan médian P. La denture 8d2 d'engrènement avec le solaire 7 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 8d1, 8d2 comprend ici une seule hélice.

Comme évoqué dans ce qui précède, cette architecture « double étage » génère des moments non négligeables au niveau des satellites 8 en particulier car ce double étage est à denture asymétrique.

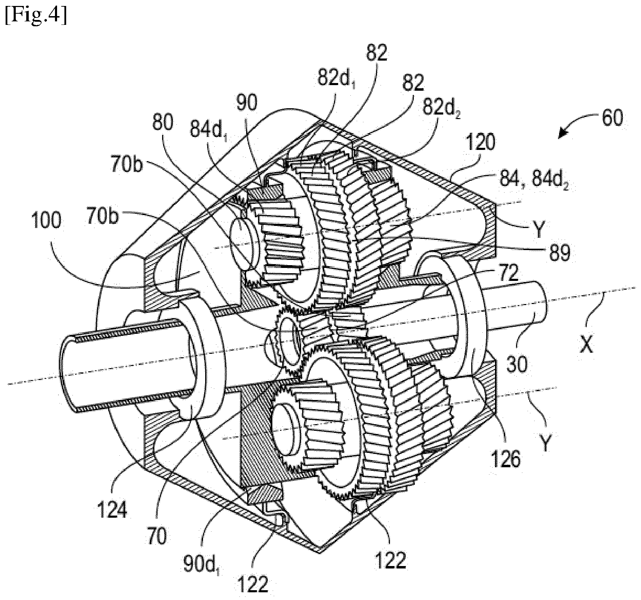

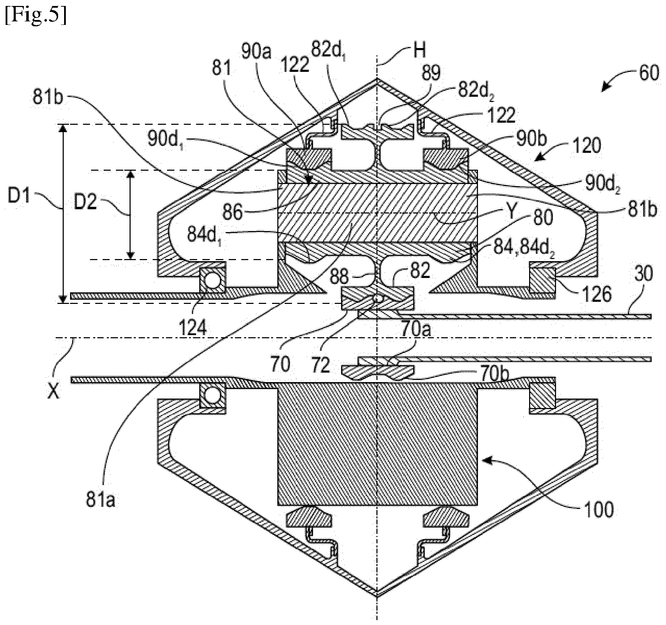

Les figures 4 et 5 montrent un réducteur 60 à double denture symétrique, qui permet de résoudre le problème précité.

Ce réducteur 60 comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 5).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des dents 90d1, 90d2.

Le porte-couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représente la moyenne entre le diamètre maximal et le diamètre minimal d'une denture de ce satellite.

Chaque satellite 80 comprend un manchon cylindrique 86 et un voile annulaire 88 s'étendant sensiblement radialement vers l'extérieur depuis le milieu de ce manchon 86. La denture 84 est séparée en deux séries de dents 84d1, 84d2 en chevron qui sont situées respectivement sur les extrémités axiales du manchon 86. La denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

Chacun des satellites 80 est guidé en rotation par un palier hydrodynamique 81 qui comprend un corps cylindrique 81a qui traverse le satellite 80, et en particulier son manchon 86, et qui est configuré pour former un film d'huile de guidage à l'intérieur du satellite.

Le corps 81a d'un palier 26 s'étend le long de l'axe Y et comprend à ses extrémités longitudinales des extensions 81b logées dans des orifices formant des sièges du porte-satellites 100.

Le corps 81a est en général tubulaire et comprend un alésage interne de circulation d'huile qui communique en général avec des conduits d'amenée d'huile jusqu'à une surface cylindrique externe du corps en vue de la formation du film d'huile entre cette surface et une surface cylindrique interne du satellite 80.

Dans un encombrement réduit, il est possible d'augmenter le rapport de réduction d'un réducteur mécanique, qu'il soit par exemple de la technologie de la figure 3 ou de celles des figures 4 et 5.

Le réducteur comprend l'ensemble des caractéristiques décrites dans ce qui précède en relation avec les figures 3, 4 et 5 dans la mesure où elles ne sont pas contraires ou ne contredisent pas ce qui suit.

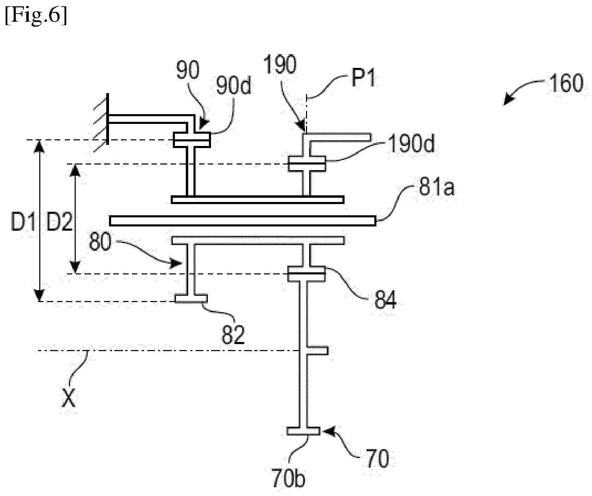

Les références utilisées dans les figures 6 et suivantes et déjà utilisées dans les figures 3, 4 et 5 désignent donc des éléments identiques ou similaires.

Les figures 6 à 8 illustrent plusieurs types d'un réducteur 160, qui comprend :
- un solaire 70 qui est mobile en rotation autour de l'axe X et qui comporte une denture externe 70b,
- une couronne 90 fixe qui s'étend autour de l'axe X et qui porte une denture interne 90d, cette couronne fixe étant configurée pour être fixée à un stator de la turbomachine,
- des satellites 80 qui sont engrenés avec le solaire 70 et la couronne 90 fixe, les satellites étant portés par un porte-stellites non représenté qui est mobile en rotation autour de l'axe X, et
- une couronne 190 mobile qui s'étend autour de l'axe X et qui porte une denture interne 190d, cette couronne mobile étant indépendante de la couronne 90 fixe et étant configurée pour être fixée à un rotor de la turbomachine.

Chacun des satellites 80 est engrené avec le solaire 70 et les couronnes 90, 190 et comprend une première denture externe 82 de diamètre moyen D1, et une seconde denture externe 84 de diamètre moyen D2, différent de D1. Dans l'exemple représenté, D1 est supérieur à D2.

La référence 81a désigne le corps cylindrique 81a du palier hydrodynamique de guidage de chaque satellite 80, comme évoqué dans ce qui précède. Dans la figure 6, la denture 84 de diamètre D2 de chaque satellite 80 est engrenée avec la denture 70b du solaire 70 et la denture 190d de la couronne 190 mobile. Les dentures 70b, 84 et 190d sont ainsi dans un même plan P1 perpendiculaire à l'axe X. La denture 82 de diamètre D1 de chaque satellite 80 est engrenée avec la denture 90d de la couronne 90 fixe.

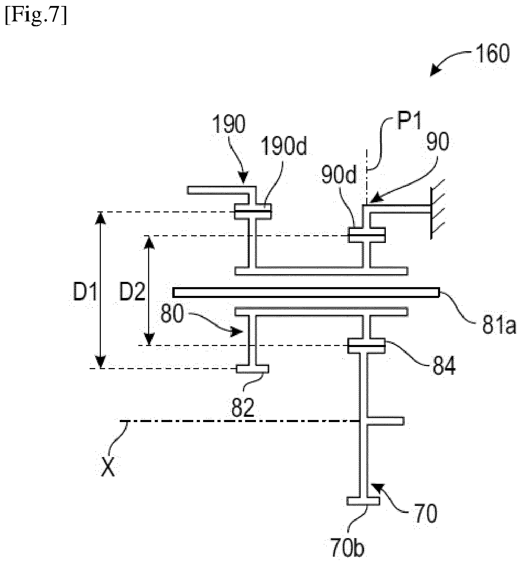

Dans la figure 7, la denture 82 de diamètre D1 de chaque satellite 80 est engrenée avec la denture 190d de la couronne 190 mobile. La denture 84 de diamètre D2 de chaque satellite 80 est engrenée avec la denture 70b du solaire 70 et la denture 90d de la couronne 90 fixe. Les dentures 70b, 84 et 90d sont ainsi dans un même plan P1 perpendiculaire à l'axe X.

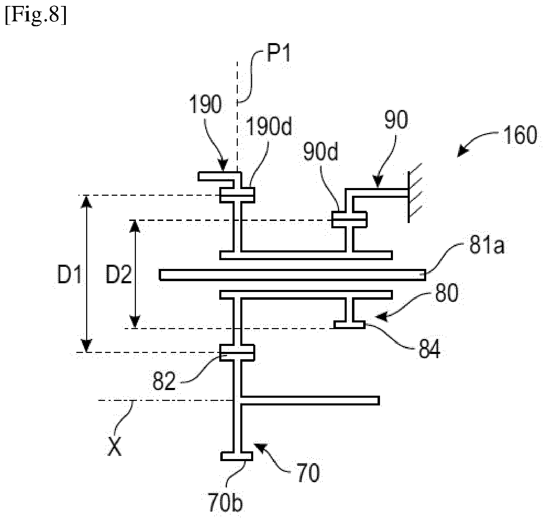

Dans la figure 8, la denture 82 de diamètre D1 de chaque satellite 80 est engrenée avec la denture 190d de la couronne 190 mobile et avec la denture 70b du solaire 70. Les dentures 70b, 82 et 190d sont ainsi dans un même plan P1 perpendiculaire à l'axe X. La denture 84 de diamètre D2 de chaque satellite 80 est engrenée avec la denture 90d de la couronne 90 fixe.

Dans les configurations des figures 6 et 8 où le solaire 70 et la couronne 190 mobile engrènent les mêmes dentures des satellites 80, on peut dire que la sortie (de couple) du réducteur est alignée avec son entrée. Dans la configuration de la figure 7 où le solaire 70 et la couronne 190 mobile engrènent des dentures différentes des satellites 80, on peut dire que la sortie (de couple) du réducteur est opposée à son entrée.

Le nombre de dents de la couronne 190 mobile peut être identique au nombre de dents de la couronne 90 fixe. En variante, ces nombres sont différents. Le sens de rotation de la couronne 190 mobile peut dépendre du diamètre relatif des deux couronnes 90, 190. A titre d'exemple, si le diamètre (primitif) de la couronne 190 mobile est supérieur à celui de la couronne 90 fixe, le réducteur 160 est contra-rotatif, c'est-à-dire que la couronne 190 mobile tournent en sens inverse du solaire 70. Si le diamètre de la couronne 190 mobile est inférieur à celui de la couronne 90 fixe, le réducteur 160 est co-rotatif, c'est-à-dire que la couronne 190 et le solaire 70 tournent dans le même sens.

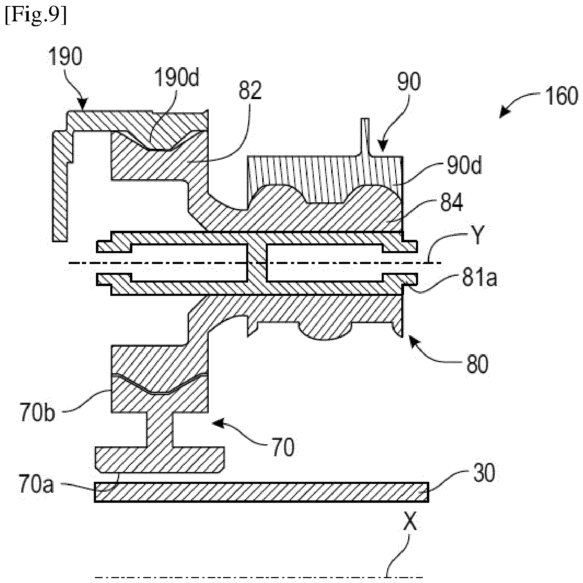

La figure 9 illustre partiellement et de manière plus concrète le réducteur 160 de la figure 8.

La référence 30 désigne l'arbre BP dont une extrémité comprend des cannelures complémentaire des cannelures 70a du solaire 70. La figure 9 permet de voir que les satellites 80 sont disposés autour de l'arbre BP 30 ou d'une partie de cet arbre. C'est notamment le cas lorsque la couronne 90 fixe est située en aval de la couronne 190 mobile. Comme l'arbre BP 30 provient de l'aval de la turbomachine, il est accouplé aux dentures 82 amont des satellites 80 et les dentures 84 de ces satellites sont situées autour de l'arbre BP 30.

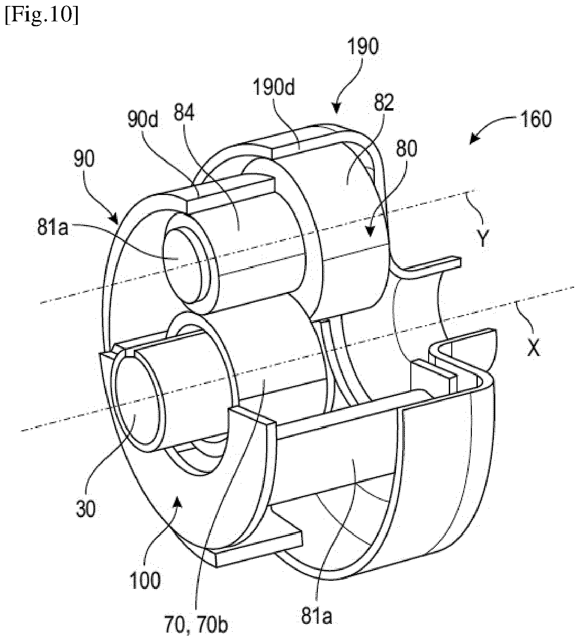

La figure 10 illustre partiellement et de manière plus concrète le réducteur 160 de la figure 7.

La référence 30 désigne également l'arbre BP et la référence 100 désigne le porte-satellites qui porte les corps cylindriques 81a des paliers hydrodynamiques des satellites 80. L'arbre BP 30 qui provient de l'aval est ici accouplé aux dentures 84 aval des satellites 80.

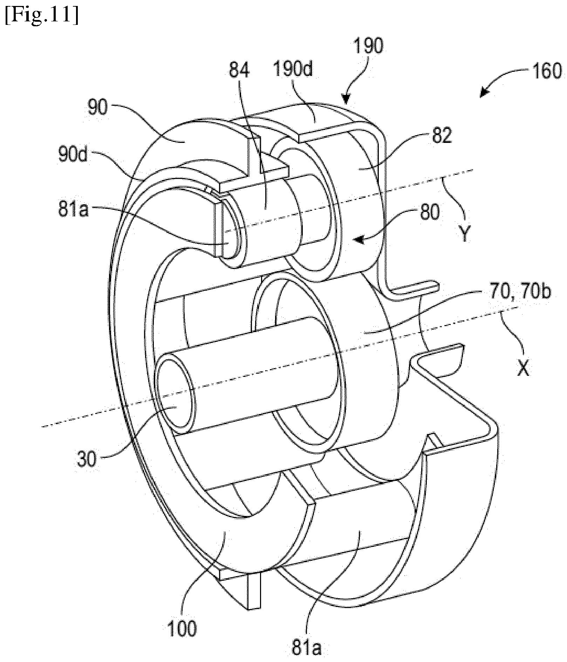

La figure 11 illustre partiellement et de manière plus concrète le réducteur 160 de la figure 8.

La référence 30 désigne également l'arbre BP et la référence 100 désigne le porte-satellites qui porte les corps cylindriques 81a des paliers hydrodynamiques des satellites 80.

En comparant les réducteurs des figures 9 à 11, on constate que l'encombrement axial du réducteur 160 peut être réduit en disposant les satellites 80 autour d'au moins une partie de l'arbre BP 30, comme c'est le cas aux figures 9 et 11.

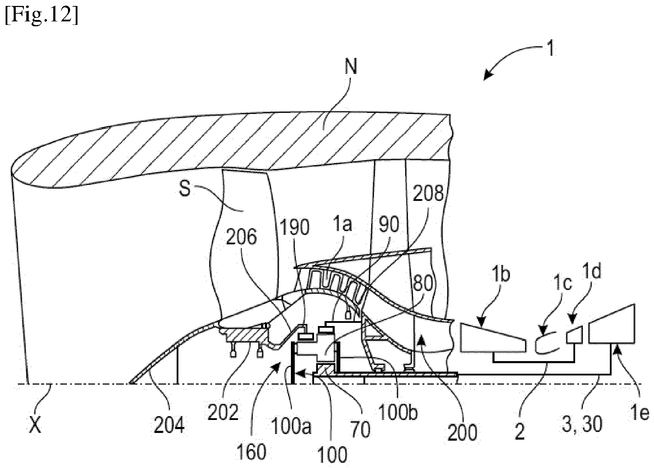

La figure 12 montre un exemple d'intégration d'un réducteur 160 des figures 6 à 11, dans une turbomachine 1 d'aéronef.

L'arbre BP 3, 30 est accouplé au solaire 70 du réducteur 160. La couronne 90 fixe est fixée à un élément de stator de la turbomachine qui est situé à l'aval du réducteur 160, et qui est un carter de stator et plus exactement le carter intermédiaire 200 dans l'exemple représenté, c'est-à-dire le carter qui est situé entre les compresseurs BP 1a et HP 1b et qui relie le moteur au carter de soufflante et à la nacelle N de la turbomachine. La liaison de la couronne 90 au carter 200 est réalisée par un porte-couronne 208.

La couronne 190 mobile est fixée à un rotor de la turbomachine qui est le rotor 202 de la soufflante S dans l'exemple représenté. Ce rotor 202 porte le cône d'entrée 204 de la turbomachine, qui est donc solidaire en rotation de la soufflante S.

Le porte-satellites 100 est libre en rotation et comprend par exemple deux anneaux 100a, 100b coaxiaux centrés sur l'axe X et reliés respectivement aux extrémités axiales des corps cylindriques 81a précités, comme cela est illustré aux figures 10 et 11. L'anneau 100a est situé en amont du réducteur 160 et de l'arbre BP 3, 30, et radialement à l'intérieur du porte-couronne 206 de liaison de la couronne 190 mobile au rotor de soufflante 202. L'anneau 100b est situé en aval du réducteur 160 et s'étend autour de l'arbre BP 3, 30 et radialement à l'intérieur du porte-couronne 208.

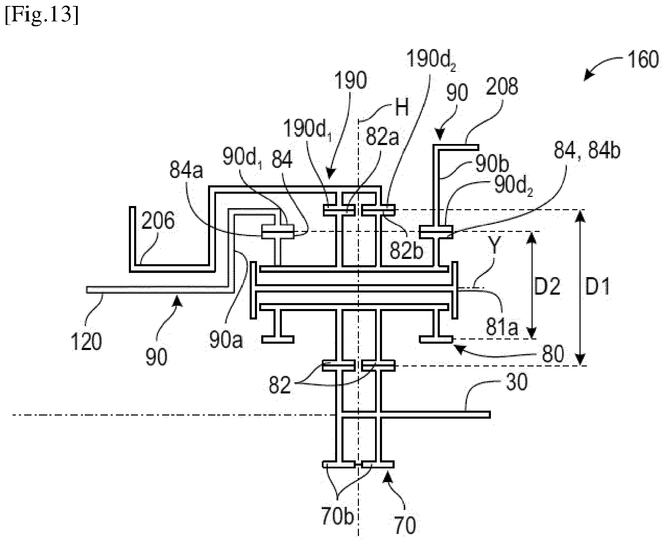

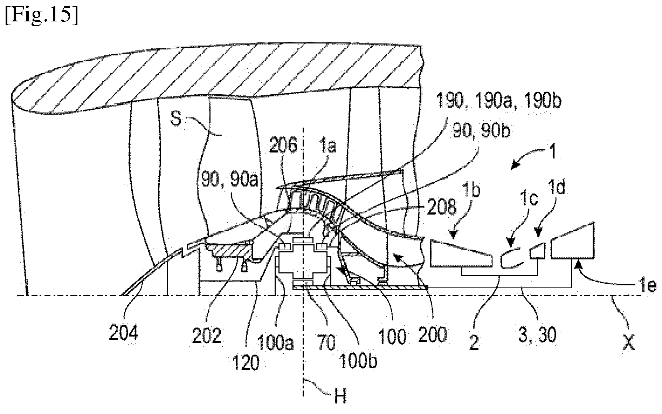

On se réfère maintenant à des modes de réalisation de l'invention illustrés aux figures 13 à 15, dans lesquels chacune des dentures du solaire, des satellites et des couronnes comprend deux séries annulaires de dents coaxiales.

La denture 70b du solaire présente deux séries de dents adjacentes, par exemple en chevron, séparées l'une de l'autre par une rainure annulaire 72 orientée radialement vers l'extérieur. La denture 70b est symétrique par rapport à un plan H perpendiculaire à l'axe, ses dents étant situées de part et d'autre du plan H qui passe par la rainure 72.

Chaque satellite 80 est du type à double étage d'engrènement et comprend un manchon tubulaire 86 relié par un voile 88 à une première denture 82 externe, le manchon 86 étant lui-même équipé d'une seconde denture 84. La première denture 82 a un diamètre moyen D1 et engrène avec le solaire 70, et la seconde denture 84 a un diamètre moyen D2, différent de D1 et en particulier inférieur à D1, et engrène avec les couronnes 90, 190.

La denture 84 est séparée en deux séries de dents 84a, 84b, par exemple en chevron, qui sont situées respectivement sur les extrémités axiales du manchon 86. La denture 82 comprend deux séries de dents 82a, 82b, par exemple également en chevron, qui sont situées à la périphérie externe d'un ou de voile(s) 88 et qui sont séparées l'une de l'autre par une rainure annulaire 89 débouchant radialement vers l'extérieur par rapport à l'axe Y. La denture 82 est traversée en son milieu par le plan H qui passe par la rainure 89, les dents 82a, 82b étant donc disposées de part et d'autre du plan H. Les dents 84a, 84b sont également disposées de manière symétrique par rapport au plan H.

La couronne 90 est formée par deux demi-couronnes ou anneaux 90a, 90b indépendants et comprend une denture qui est séparée en deux séries de dents 90d1, 90d2, par exemple en chevron, portées respectivement par les deux anneaux. Les anneaux 90a, 90b sont disposés de manière symétrique par rapport au plan H qui s'étend donc entre ces anneaux.

L'un des anneaux 90a, situé à l'amont, est relié par un porte-couronne 120 au cône d'entrée 204 de la turbomachine 1. Le cône d'entrée 204 est donc un stator de la turbomachine 1 dans l'exemple représenté, contrairement à l'exemple de la figure 12. L'autre anneau 90b, situé à l'aval, est relié par un porte-couronne 208 au carter intermédiaire 200.

La couronne 190 est séparée en deux demi-couronnes:
▪ Une demi-couronne amont 190a comportant une jante 190aa et une demi-bride de fixation 190ab. Sur la jante 190aa se trouve une première série de dents 190d1 engrenée avec la série de dents 82a de chaque satellite 80,
▪ Une demi-couronne aval 190b comportant une jante 190ba et une demi-bride de fixation 190bb. Sur la jante 190ba se trouve une seconde série de dents 190d2 engrenée avec la série de dents 82b de chaque satellite 80.

Les demi-brides de fixation 190ab et 190bb forment une bride de fixation de la couronne 190 à un porte-couronne 206 qui est fixé au rotor 204 de la soufflante S.

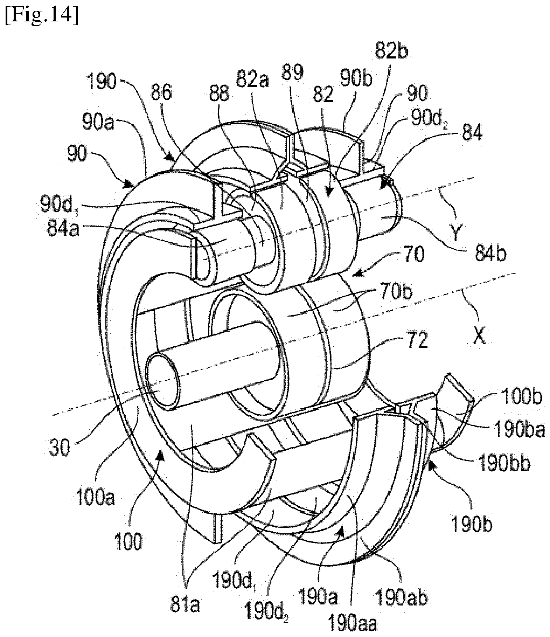

Le porte-satellites 100 est libre en rotation et comprend par exemple deux anneaux 100a, 100b coaxiaux centrés sur l'axe X et reliés respectivement aux extrémités axiales des corps cylindriques 81a précités, comme cela est illustré à la figure 14. L'anneau 100a est situé en amont du réducteur 160 et de l'arbre BP 3, 30, et radialement à l'intérieur du porte-couronne 120 qui est lui-même situé à l'intérieur du porte-couronne 206. L'anneau 100b est situé en aval du réducteur 160 et s'étend autour de l'arbre BP 3, 30 et radialement à l'intérieur du porte-couronne 208.

Le nombre de dents de chaque série de dents 190d1, 190d2 de la couronne 190 mobile peut être identique au nombre de dents de chaque série de dents 90d1, 90d2 de la couronne 90 fixe. En variante, ces nombres sont différents. Le sens de rotation de la couronne 190 mobile est dépendant du rapport du nombre de dents entre les deux couronnes 90, 190, comme évoqué dans ce qui précède.

L'utilisation de l'invention telle que représentée aux figures 13 à 15 avec des dentures en chevron permet avantageusement de s'affranchir des moments et efforts axiaux qui sont susceptibles d'apparaître dans les satellites, sans qu'il soit nécessaire que ces moments et efforts soient repris par les paliers des satellites et par le porte-satellites, qui nécessiteraient alors d'être dimensionnés en conséquence.

## Revendications

1. Réducteur mécanique (160) de turbomachine (1), en particulier d'aéronef, ce réducteur comportant :
- un solaire (70) mobile en rotation autour d'un axe (X) et comportant une denture externe (70b) comprenant deux séries de dents (70b) adjacentes,
- une couronne fixe (90) qui s'étend autour de l'axe (X) et qui porte une denture interne (90d) comportant deux séries de dents (90d1, 90d2), cette couronne fixe (90) étant configurée pour être fixée à un stator de la turbomachine, et
- des satellites (80) qui sont engrenés avec le solaire (70) et la couronne fixe (90), les satellites (80) étant portés par un porte-stellites (100) mobile en rotation autour de l'axe (X) et chacun des satellites (80) étant à double étage d'engrènement et comportant une première denture externe (82) de diamètre moyen D1 et comportant deux séries de dents (82a, 82b) adjacentes, et une seconde denture externe (84) de diamètre moyen D2, différent de D1, et comportant deux séries de dents (84a, 84b), les deux séries de dents (82a, 82b) de la première denture (82) de chacun des satellites (80) étant engrenées avec les deux séries de dents (82a, 82b) de la denture (70b) du solaire (70),
**caractérisé en ce qu'**il comprend en outre :
- une couronne mobile (190) qui s'étend autour de l'axe (X) et qui porte une denture interne (190d) à deux séries de dents (190d1, 190d2) adjacentes, cette couronne mobile (190) étant indépendante de la couronne fixe (90) et étant configurée pour être fixée à un rotor (202) de la turbomachine, chacun des satellites (80) étant engrenés avec le solaire (70) et les couronnes fixe et mobile (90, 190),
**en ce que** toutes les séries de dents (82a, 82b, 90d1, 90d2, 190d1, 190d2) sont disposées de manière symétrique par rapport à un plan médian (H) perpendiculaire à l'axe (X),
et **en ce que** la couronne mobile (190) comprend deux demi-couronnes (190a, 190b) fixées entre elles et portant respectivement les deux séries de dents (190d1, 190d2), ces deux séries de dents étant engrenées avec les deux séries de dents (82a, 82b) de la première denture (82) de chacun des satellites (80), et la couronne fixe (90) comprenant deux anneaux (90a, 90b) disposés de chaque côté de la couronne mobile (190) et portant respectivement les deux séries de dents (90d1, 90d2), ces deux séries de dents étant engrenées avec les deux séries de dents (84a, 84b) de la seconde denture (84) de chacun des satellites (80).

2. Réducteur mécanique (160) selon la revendication 1, dans lequel chacun des satellites (80) est engrené par sa première denture (82) avec la denture (70b) du solaire (70) et la denture (90d) de la couronne fixe (90), et par sa seconde denture (84) avec la denture (190d) de la couronne mobile (190).

3. Réducteur mécanique (160) selon la revendication 1, dans lequel chacun des satellites (80) est engrené par sa première denture (82) avec la denture (70d) du solaire (70) et la denture (190d) de la couronne mobile (190), et par sa seconde denture (84) avec la denture (90d) de la couronne fixe (90).

4. Réducteur mécanique (160) selon l'une des revendications précédentes, dans lequel le solaire (70) est accouplé à un arbre (30) ou solidaire d'un arbre, les satellites (80) pouvant être disposés autour d'au moins une partie de cet arbre.

5. Réducteur mécanique (160) selon l'une des revendications précédentes, dans lequel les dentures des couronnes fixe et mobile (90, 190) ont un même nombre de dents.

6. Réducteur mécanique (160) selon l'une des revendications 1 à 4, dans lequel les dentures des couronnes fixe et mobile (90, 190) ont des nombres de dents différents.

7. Réducteur mécanique (160) selon l'une des revendications précédentes, dans lequel toutes les dentures (70b, 82, 84, 90d, 190d) sont choisies parmi des dentures, droites, hélicoïdales ou en chevrons.

8. Réducteur mécanique (160) selon l'une des revendications précédentes, dans lequel le diamètre D2 de la seconde denture (84) est inférieur au diamètre D1 de la première denture (82).

9. Turbomachine (1), en particulier d'aéronef, comportant un réducteur mécanique (160) selon l'une des revendications précédentes.

10. Turbomachine (1) selon la revendication 9, dans laquelle la couronne fixe (90) est fixée à au moins un élément de stator, et/ou la couronne mobile (190) est fixée à un rotor de soufflante (202), et/ou le porte-satellites (100) est montée libre en rotation.

11. Turbomachine (1) selon la revendication 9 ou 10, dans laquelle un des anneaux (90b) de la couronne fixe (90) est fixé à un élément de stator situé en aval du réducteur (160), tel qu'un carter de stator et par exemple un carter intermédiaire (200), et l'autre des anneaux (90a) de la couronne fixe (90) est fixé à un élément de stator situé en amont du réducteur (160), tel qu'un cône (204) d'entrée d'air.

## Patentansprüche

1. Mechanisches Untersetzungsgetriebe (160) für Turbotriebwerk (1), insbesondere eines Luftfahrzeugs, wobei dieses Untersetzungsgetriebe umfasst:
- ein Sonnenrad (70), das drehbeweglich um eine Achse (X) ist und eine äußere Verzahnung (70b) umfasst, die zwei benachbarte Zahnreihen (70b) umfasst,
- eine feste Krone (90), die sich um die Achse (X) erstreckt und die eine innere Verzahnung (90d) trägt, die zwei Zahnreihen (90d1, 90d2) umfasst, wobei diese feste Krone (90) konfiguriert ist, um an einem Stator des Turbotriebwerks befestigt zu werden; und
- Planeten (80), die mit dem Sonnenrad (70) und der festen Krone (90) im Eingriff stehen, wobei die Planeten (80) von einem um die Achse (X) drehbeweglichen Planetenträger (100) getragen werden und wobei jeder der Planeten (80) eine zweistufige Zahnanlage aufweist und eine erste äußere Verzahnung (82) mit mittlerem Durchmesser D1, die zwei benachbarte Zahnreihen (82a, 82b) umfasst, und eine zweite äußere Verzahnung (84) mit mittlerem Durchmesser D2 umfasst, der sich von D1 unterscheidet, die zwei Zahnreihen (84a, 84b) umfasst, wobei die zwei Zahnreihen (82a, 82b) der ersten Verzahnung (82) jedes der Planeten (80) mit den zwei Zahnreihen (82a, 82b) der Verzahnung (70b) des Sonnenrads (70) in Eingriff stehen,
**dadurch gekennzeichnet, dass** es weiter umfasst:
- eine bewegliche Krone (190), die sich um die Achse (X) erstreckt und die eine innere Verzahnung (190d) mit zwei benachbarten Zahnreihen (190d1, 190d2) trägt, wobei diese bewegliche Krone (190) unabhängig von der festen Krone (90) ist und konfiguriert ist, um an einem Rotor (202) des Turbotriebwerks befestigt zu werden, wobei jeder der Planeten (80) mit dem Sonnenrad (70) und der festen und der beweglichen Krone (90, 190) in Eingriff steht,
dadurch, dass alle Zahnreihen (82a, 82b, 90d1,90d2, 190d1, 190d2) in Bezug auf eine mittlere Ebene (H) senkrecht zur Achse (X) symmetrisch angeordnet sind;
und dadurch, dass die bewegliche Krone (190) zwei Halbkronen (190a, 190b) umfasst, die aneinander befestigt sind und jeweils die zwei Zahnreihen (190d1, 190d2) tragen, wobei diese zwei Zahnreihen mit den zwei Zahnreihen (82a, 82b) der ersten Verzahnung (82) jedes der Planeten (80) in Eingriff stehen, und wobei die feste Krone (90) zwei Ringe (90a, 90b) umfasst, die auf jeder Seite der beweglichen Krone (190) angeordnet sind und jeweils die zwei Zahnreihen (90d1, 90d2) tragen, wobei diese zwei Zahnreihen mit den zwei Zahnreihen (84a, 84b) der zweiten Verzahnung (84) jedes der Planeten (80) in Eingriff stehen.

2. Mechanisches Untersetzungsgetriebe (160) nach Anspruch 1, wobei jeder der Planeten (80) über seine erste Verzahnung (82) mit der Verzahnung (70b) des Sonnenrads (70) und der Verzahnung (90d) der festen Krone (90), und über seine zweite Verzahnung (84) mit der Verzahnung (190d) der beweglichen Krone (190) in Eingriff steht.

3. Mechanisches Untersetzungsgetriebe (160) nach Anspruch 1, wobei jeder der Planeten (80) über seine erste Verzahnung (82) mit der Verzahnung (70b) des Sonnenrads (70) und der Verzahnung (190d) der beweglichen Krone (190), und über seine zweite Verzahnung (84) mit der Verzahnung (90d) der festen Krone (90) in Eingriff steht.

4. Mechanisches Untersetzungsgetriebe (160) nach einem der vorstehenden Ansprüche, wobei das Sonnenrad (70) mit einer Welle (30) gekoppelt oder mit einer Welle fest verbunden ist, wobei die Planeten (80) um mindestens einen Teil dieser Welle herum angeordnet sein können.

5. Mechanisches Untersetzungsgetriebe (160) nach einem der vorstehenden Ansprüche, wobei die Verzahnungen der festen und der beweglichen Krone (90, 190) eine gleiche Anzahl von Zähnen aufweisen.

6. Mechanisches Untersetzungsgetriebe (160) nach einem der Ansprüche 1 bis 4, wobei die Verzahnungen der festen und der beweglichen Krone (90, 190) unterschiedliche Anzahlen von Zähnen aufweisen.

7. Mechanisches Untersetzungsgetriebe (160) nach einem der vorstehenden Ansprüche, wobei alle Verzahnungen (70b, 82, 84, 90d, 190d) aus geraden, schneckenförmigen oder zickzackförmigen Verzahnungen ausgewählt sind.

8. Mechanisches Untersetzungsgetriebe (160) nach einem der vorstehenden Ansprüche, wobei der Durchmesser D2 der zweiten Verzahnung (84) kleiner ist als der Durchmesser D1 der ersten Verzahnung (82).

9. Turbotriebwerk (1), insbesondere eines Luftfahrzeugs, das ein mechanisches Untersetzungsgetriebe (160) nach einem der vorstehenden Ansprüche umfasst.

10. Turbotriebwerk (1) nach Anspruch 9, wobei die feste Krone (90) an mindestens einem Statorelement befestigt ist und/oder die bewegliche Krone (190) an einem Gebläserotor (202) befestigt ist und/oder der Planetenträger (100) frei drehend montiert ist.

11. Turbotriebwerk (1) nach Anspruch 9 oder 10, wobei einer der Ringe (90b) der festen Krone (90) an einem Statorelement befestigt ist, das sich stromabwärts des Untersetzungsgetriebes (160) befindet, wie ein Statorgehäuse und beispielsweise ein zwischenliegendes Gehäuse (200), und der andere der Ringe (90a) der festen Krone (90) an einem Statorelement befestigt ist, das sich stromaufwärts des Untersetzungsgetriebes (160) befindet, wie etwa ein Lufteinlasskegel (204).

## Claims

1. A mechanical reduction gear (160) for a turbine engine (1), in particular for an aircraft, this reduction gear comprising:
- a sun gear (70) mobile in rotation about an axis (X) and comprising an external toothing (70b) comprising two series of adjacent teeth (70b),
- a stationary ring gear (90) which extends around the axis (X) and which carries an internal toothing (90d) comprising two series of teeth (90d1, 90d2), this stationary ring gear (90) being configured to be secured to a stator of the turbine engine, and
- planet gears (80) which are meshed with the sun gear (70) and the stationary ring gear (90), the planet gears (80) being carried by a planet carrier (100) which is mobile in rotation about the axis (X) and each of the planet gears (80) having a meshing dual-stage and comprising a first external toothing (82) of mean diameter D1 and comprising two series of adjacent teeth (82a, 82b), and a second external toothing (84) of mean diameter D2, different from D1, and comprising two series of teeth (84a, 84b), the two series of teeth (82a, 82b) of the first toothing (82) of each of the planet gears (80) being meshed with the two series of teeth (82a, 82b) of the toothing (70b) of the sun gear (70),
**characterised in that** it further comprises:
- a mobile ring gear (190) which extends about the axis (X) and which carries an internal toothing (190d) with two series of adjacent teeth (190d1, 190d2), this mobile ring gear (190) being independent of the stationary ring gear (90) and being configured so as to be secured to a rotor (202) of the turbine engine, each of the planet gears (80) being meshed with the sun gear (70) and the stationary and mobile ring gears (90, 190),
**in that** all the series of teeth (82a, 82b, 90d1, 90d2, 190d1, 190d2) are arranged symmetrically with respect to a median plane (H) perpendicular to the axis (X),
and **in that** the mobile ring gear (190) comprises two half ring gears (190a, 190b) secured to each other and respectively carrying the two series of teeth (190d1, 190d2), these two series of teeth being meshed with the two series of teeth (82a, 82b) of the first toothing (82) of each of the planet gears (80) and the stationary ring gear (90) comprising two rings (90a, 90b) disposed on each side of the mobile ring gear (190) and respectively carrying the two series of teeth (90d1, 90d2), these two series of teeth being meshed with the two series of teeth (84a, 84b) of the second toothing (84) of each of the planet gears (80).

2. The mechanical reduction gear (160) according to claim 1, wherein each of the planet gears (80) is meshed by its first toothing (82) with the toothing (70b) of the sun gear (70) and the toothing (90d) of the stationary ring gear (90), and by its second toothing (84) with the toothing (190d) of the mobile ring gear (190).

3. The mechanical reduction gear (160) according to claim 1, wherein each of the planet gears (80) is meshed by its first toothing (82) with the toothing (70d) of the sun gear (70) and the toothing (190d) of the mobile ring gear (190), and by its second toothing (84) with the toothing (90d) of the stationary ring gear (90).

4. The mechanical reduction gear (160) according to any one of the preceding claims, wherein the sun gear (70) is coupled to a shaft (30) or secured to a shaft, the planet gears (80) being disposed around at least a part of this shaft.

5. The mechanical reduction gear (160) according to one of the preceding claims, wherein the toothing of the stationary and mobile ring gears (90,190) have a same number of teeth.

6. The mechanical reduction gear (160) according to one of claims 1 to 4, wherein the toothing of the stationary and mobile ring gears (90, 190) have different numbers of teeth.

7. The mechanical reduction gear (160) according to one of the preceding claims, wherein all the toothings (70b, 82, 84, 90d, 190d) are selected from straight, helical or herringbone toothings.

8. The mechanical reduction gear (160) according to one of the preceding claims, wherein the diameter D2 of the second toothing (84) is smaller than the diameter D1 of the first toothing (82).

9. A turbine engine (1), in particular for aircraft, comprising a mechanical reduction gear (160) according to one of the preceding claims.

10. The turbine engine (1) according to claim 9, wherein the stationary ring gear (90) is secured to at least one stator element, and/or the mobile ring gear (190) is secured to a fan rotor (202), and/or the planet carrier (100) is mounted to rotate freely.

11. The turbine engine (1) according to claim 9 or 10, wherein one of the rings (90b) of the stationary ring gear (90) is secured to a stator element located downstream of the reduction gear (160), such as a stator casing and for example an intermediate casing (200), and the other of the rings (90a) of the stationary ring gear (90) is secured to a stator element located upstream of the reduction gear (160), such as an air inlet cone (204).
